# EUROPEAN PATENT APPLICATION

(11) **EP 3 305 066 A1**
(43) Date of publication of application: **11.04.2018**
(21) Application number: 16802755.5
(22) Date of filing: 13.05.2016
(51) Int. Cl.: A01G 31/00

(54) **AQUACULTURE DEVICE**

(30) Priority: 02.06.2015 JP 2015112106
(71) Applicant: Panasonic Intellectual Property Management Co., Ltd., Osaka-shi, Osaka 540-6207 (JP)
(72) Inventor: YANO, Hiroshi, Osaka-shi, Osaka 540-6207 (JP); JEONG, WooHyeun, Osaka-shi, Osaka 540-6207 (JP)
(74) Representative: Müller-Boré & Partner Patentanwälte PartG mbB
(86) International application number: PCT/JP2016/002362
(87) International publication number: WO 2016/194312

(57) **Abstract**

A hydroponic cultivation apparatus (100) includes: a cultivation chamber underground portion (67) internally including an underground space where a subterranean part (1A) of a plant (1) grows such that the underground space is separated from an above-ground space where an aerial part (1B) of the plant (1) grows; an underground temperature adjuster (2478) which adjusts a temperature of an atmosphere inside the underground space; and a controller (50) which controls the underground temperature adjuster (2478), in which the controller (50) includes a dormancy determination unit which determines whether a time of cultivation of the plant (1) is a dormant period when leaves of the aerial part (1B) wither, and a temperature controller which makes the underground temperature adjuster (2478) adjust the temperature of the atmosphere inside the underground space so as to facilitate germination of the plant (1) in a case where the dormancy determination unit determines that the time of cultivation of the plant (1) is the dormant period when leaves of the aerial part (1B) wither.

## Description

### TECHNICAL FIELD

The present invention relates to a so-called hydroponic cultivation apparatus configured to grow a plant with its roots immersed in water without using soil.

### BACKGROUND ART

Development of hydroponic cultivation apparatuses has been underway. In hydroponics, the water and air temperatures in an environment around a plant are controlled. An example of a related art document which discloses the technique related to this is Patent Literature 1 given blow.

### CITATION LIST

### PATENT LITERATURE

Patent Literature 1: Japanese Unexamined Patent Application Publication No. 2010-233481

### SUMMARY OF INVENTION

Among perennial plants are so-called rhizocarpous plants which have a dormant period when leaves of their aerial parts wither and a growth period when leaves of new aerial parts grow thick. An environment suitable for a plant differs depending on whether the plant is in a dormant period or in a growth period. For this reason, hydroponics for artificially growing plants is required to provide two environments, one for a dormant period and the other for a growth period, between which the temperature is different.

However, the conventional hydroponic cultivation apparatuses, including one disclosed in Patent Literature 1, do not provide two environments, one for the dormant period and the other for the growth period, between which the temperature condition or the light condition is different. The conventional hydroponic cultivation apparatuses do not provide, particularly, an environment for facilitating germination while breaking dormancy. As a result, the conventional practice is to grow a plant, which has already germinated after experiencing the dormant period in another place, in a hydroponic cultivation apparatus. Against this background, there has been a demand for a technique which is capable of facilitating the germination of a plant in dormancy and subsequently growing the plant both in a single hydroponic cultivation apparatus.

The present invention has been made in view of such problems with the conventional techniques. It is an object of the present invention to provide a hydroponic cultivation apparatus capable of both facilitating the germination of a plant in dormancy, and thereafter growing the plant.

In order to solve the above problem, a hydroponic cultivation apparatus according to a first aspect of the present invention includes: a cultivation chamber underground portion internally including an underground space where a subterranean part of a plant grows such that the underground space is separated from an above-ground space where an aerial part of the plant grows; an underground temperature adjuster which adjusts a temperature of an atmosphere inside the underground space; and a controller which controls the underground temperature adjuster, in which the controller includes a dormancy determination unit which determines whether a time of cultivation of the plant is a dormant period when leaves of the aerial part wither, and a temperature controller which makes the underground temperature adjuster adjust the temperature of the atmosphere inside the underground space so as to facilitate germination of the plant in a case where the dormancy determination unit determines that the time of cultivation is the dormant period.

A hydroponic cultivation apparatus according to a second aspect of the present invention includes: a cultivation chamber underground portion internally including an underground space where a subterranean part of a plant grows such that the underground space is separated from an above-ground space where an aerial part of the plant grows; a light emitter which is provided in the above-ground space and emits light onto the aerial part; and a controller which controls the light emitter, in which the controller includes a dormancy determination unit which determines whether a time of cultivation of the plant is a dormant period when leaves of the aerial part wither, a light characteristic determination unit which determines whether the plant is a plant which is photophilous during its germination or a plant which is sciophilous during its germination, and a lighting controller which controls the light emitter so as to increase an amount of light to be irradiated onto the aerial part in a case where the dormancy determination unit determines that the time of cultivation is the dormant period, and the light characteristic determination unit determines that the plant is the plant which is photophilous during its germination, and decrease the amount of light to be irradiated onto the aerial part in a case where the dormancy determination unit determines that the time of cultivation is the dormant period, and the light characteristic determination unit determines that the plant is the plant which is sciophilous during its germination.

According to the hydroponic cultivation apparatus of the present invention, it is capable of both facilitating germination of a plant in dormancy, and thereafter growing the plant.

### BRIEF DESCRIPTION OF DRAWINGS

[Fig. 1] Fig. 1 is a cross-sectional schematic view for explaining an overall outline of hydroponic cultivation apparatuses of embodiments of the present invention.
[Fig. 2] Fig. 2 is a functional block diagram of the hydroponic cultivation apparatus of the embodiments of the present invention.
[Fig. 3] Fig. 3 is a flowchart for explaining a temperature control process to be performed by a controller in a hydroponic cultivation apparatus of Embodiment 1 of the present invention.
[Fig. 4] Fig. 4 is a flowchart for explaining a temperature control process to be performed by a controller in a hydroponic cultivation apparatus of Embodiment 2 of the present invention.
[Fig. 5] Fig. 5 is a flowchart for explaining a temperature control process to be performed by a controller in a hydroponic cultivation apparatus of Embodiment 3 of the present invention.
[Fig. 6] Fig. 6 is a flowchart for explaining a lighting control process to be performed by a controller in a hydroponic cultivation apparatus of Embodiment 4 of the present invention.
[Fig. 7] Fig. 7 is a flowchart for explaining a lighting control process to be performed by a controller in a hydroponic cultivation apparatus of Embodiment 5 of the present invention.
[Fig. 8] Fig. 8 is a flowchart for explaining a lighting control process to be performed by a controller in a hydroponic cultivation apparatus of Embodiment 6 of the present invention.

### DESCRIPTION OF EMBODIMENTS

Referring to the drawings, descriptions will be hereinbelow provided for hydroponic cultivation apparatuses 100 of embodiments.

### (Plant to be Grown by Hydroponic Cultivation Apparatus)

An example of a plant 1 to be grown by the hydroponic cultivation apparatuses 100 of the embodiments is one of root and tuberous vegetables, such as Panax ginseng (Goryeo ginseng or Korean ginseng). However, the plant 1 to be grown by the hydroponic cultivation apparatuses 100 of the embodiments is not limited to this.

The hydroponic cultivation apparatuses 100 of the embodiments are suitable to hydroponically grow a rhizocarpous plant. Rhizocarpous plants belong to perennial plants, and their aerial parts wither in a season unsuitable for plant growth (winter in many cases, but summer in rare cases), but germinates and starts to grow again after surviving the season.

### (Configuration of Hydroponic Cultivation Apparatuses of Embodiments)

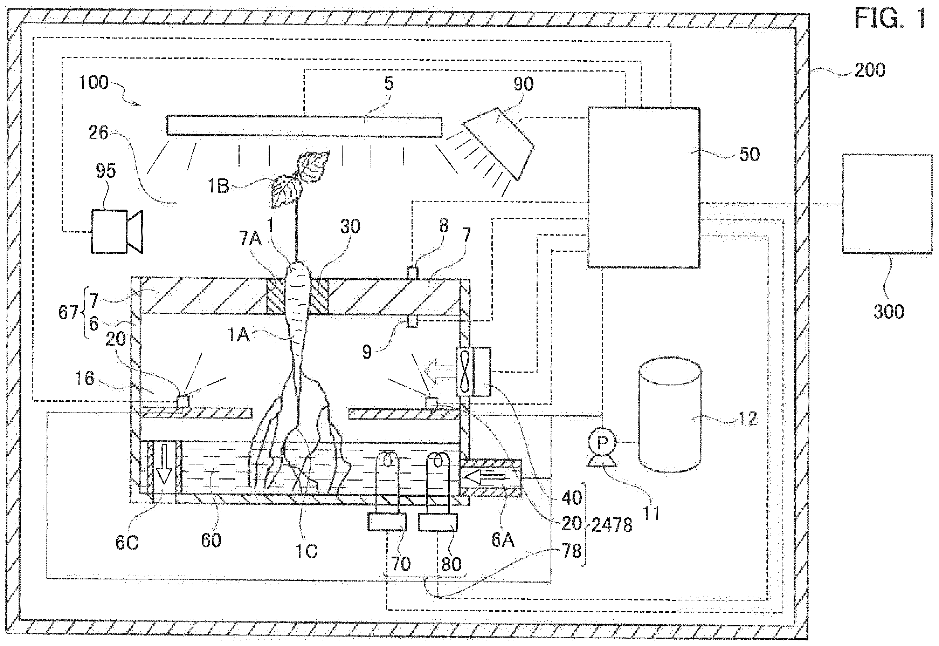

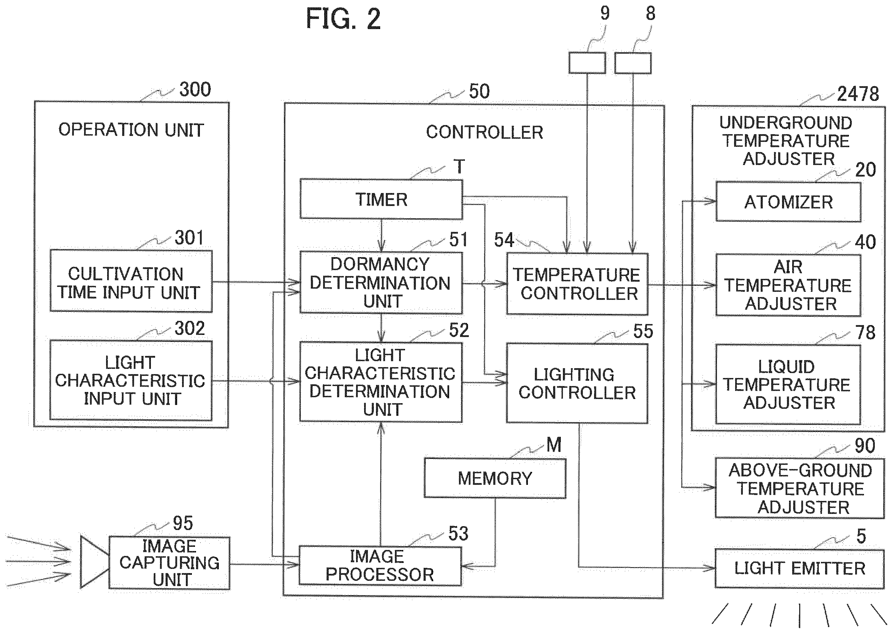

Using Figs. 1 and 2, descriptions will be provided for the hydroponic cultivation apparatus 100 of Embodiment 1. The hydroponic cultivation apparatuses 100 of Embodiments 1 to 8 each have the common configuration, which are illustrated in Figs. 1 and 2.

As illustrated in Fig. 1, the hydroponic cultivation apparatus 100 of Embodiment 1 is set up in a housing 200 shaped like a container. The housing 200 forms a substantially closed space. The housing 200 is provided with a door. A grower can enter the housing 200 by opening and closing the door. The space inside the housing 200 forms an above-ground space 26 of the hydroponic cultivation apparatus 100.

The hydroponic cultivation apparatus 100 of the embodiment includes a cultivation tank 6, a light emitter 5, a ground surface portion 7, an underground temperature detector 9, an underground temperature adjuster 2478, an above-ground temperature detector 8, an above-ground temperature adjuster 90, a controller 50, and an operation unit 300. The underground temperature adjuster 2478 includes an atomizer 20, an air temperature adjuster 40, and a liquid temperature adjuster 78.

The cultivation tank 6 contains water or a nutrient solution 60. The cultivation tank 6 includes a drain pipe 6C for draining the water or the nutrient solution 60. The cultivation tank 6 is supplied with the water or the nutrient solution 60 from a supply pipe 6A. The cultivation tank 6 has a structure similar to that of a water tank. Incidentally, a plastic-made pipe extending in a horizontal direction performs the same function as the cultivation tank 6 in a case where a through-hole is made in the pipe and a hydroponic culture medium is inserted into the through-hole. In this case, the single pipe performs two functions, namely, the same function as the cultivation tank 6, and the same function as the ground surface portion 7. For this reason, the cultivation tank 6 and the ground surface portion 7 may have a structure similar to that of a pipe in a way that the water or the nutrient solution 60 is contained in, or flows through, the pipe.

The hydroponic cultivation apparatus 100 includes the ground surface portion 7 shaped like a plate and having a through-hole 7A into which the hydroponic culture medium 30 can be inserted. In the cultivation tank 6, a subterranean part 1A of the plant 1 is supported by the ground surface portion 7 with the hydroponic culture medium 30 interposed in between, and is thereby positioned above the water or the nutrient solution 60.

The ground surface portion 7 partitions an underground space 16 where the subterranean part 1A of the plant 1 grows, and the above-ground space 26 where an aerial part 1B of the plant 1 grows. In the embodiment, the ground surface portion 7 is a plate-shaped member. The ground surface portion 7, however, may be formed in any shape as long as the ground surface portion 7 is capable of holding the hydroponic culture medium 30 such that the plant 1 is positioned above the water or the nutrient solution 60. It is preferable that the ground surface portion 7 be made of a material such as foamed styrol from a viewpoint of weight reduction.

As illustrated in Fig. 1, the hydroponic medium 30 of the hydroponic cultivation apparatus 100 is arranged to surround the subterranean part 1A of the plant 1, and is made of sponge or the like which is capable of holding moisture infiltrating in the hydroponic medium 30. The culture medium 30 is cylindrically formed around the plant 1. The plant 1 is supported by friction force between the plant 1 and the sponge. The sponge forming the hydroponic medium 30 is deformable in response to the size of the plant 1 that is growing.

The cultivation tank 6 and the ground surface portion 7 jointly form a housing as a cultivation chamber underground portion 67 which internally includes the underground space 16 where the subterranean part 1A of the plant 1 grows. The cultivation chamber underground portion 67 contains the water or the nutrient solution 60 such that roots 1C of the plant 1 are immersed in the water or the nutrient solution 60, and internally includes the underground space 16 such that the underground space 16 is separated from the above-ground space 26. The ground surface portion 7 and the cultivation tank 6 are provided in a way that makes them form a substantially closed space in order to inhibit the light from being irradiated onto the subterranean part 1A. Thus, the flow of the atmosphere into and from the underground space 16 is substantially inhibited, although a slight amount of atmosphere is allowed to flow into and from the underground space 16. Incidentally, the ground surface portion 7 and the cultivation tank 6 may be formed in any shape as long as they are configured to be capable of controlling the temperature of the atmosphere inside the underground space 16 while inhibiting the light from being irradiated onto the subterranean part 1A.

In the hydroponic cultivation apparatus 100 of this embodiment, the light emitter 5 for irradiating the light onto the aerial part 1B of the plant 1 is provided above the plant 1 in the above-ground space 26. The leaves of the plant 1 are capable of photosynthesizing while receiving the light from the light emitter 5 since they project upward from the hydroponic culture medium 30. Meanwhile, the roots 1C of the plant 1 hang down from the lower part of the subterranean part 1A of the plant 1 such that they are immersed in the water or the nutrient solution 60. Thus, the plant 1 is capable of absorbing the water or the nutrient solution 60 through the roots 1C.

The light emitter 5 is controlled between a bright mode in which the light emitter 5 irradiates the light onto the aerial part 1B of the plant 1 and a dark mode in which the light emitter 5 irradiates no light onto the aerial part 1B of the plant 1. The light emitter 5 may be not only an artificial light source which emits light in itself, but also a transparent material for irradiating solar light, or light guided from the artificial light source which emits light in itself, onto the plant 1.

The underground temperature detector 9 detects the temperature of the atmosphere inside the underground space 16, and sends information on the temperature of the atmosphere inside the underground space 16 to the controller 50. The underground temperature detector 9 may be provided in any place on the cultivation tank 6 and the ground surface portion 7 which jointly form the cultivation chamber underground portion 67, as long as the place enables the underground temperature detector 9 to detect the temperature inside the underground space 16.

The above-ground temperature detector 8 detects the temperature of the atmosphere inside the above-ground space 26, and sends information on the temperature of the atmosphere inside the above-ground space 26 to the controller 50. The underground temperature adjuster 2478 adjusts the temperature of the atmosphere inside the underground space 16. The above-ground temperature adjuster 90 adjusts the temperature of the atmosphere inside the above-ground space 26.

The underground temperature adjuster 2478 includes the atomizer 20, the air temperature adjuster 40, and the liquid temperature adjuster 78. The atomizer 20 supplies mist of the water or the nutrient solution 60 to the underground space 16. The air temperature adjuster 40 supplies a gas at predetermined temperature to the underground space 16 from the outside. The liquid temperature adjuster 78 adjusts the temperature of the water or the nutrient solution 60 in the cultivation tank 6.

The atomizer 20 adjusts the temperature the atmosphere existing inside the underground space 16 by spraying the mist of the water or the nutrient solution 60 onto the plant 1 in the cultivation tank 6. Upon receipt of a signal from the controller 50, the atomizer 20 turns from a closed state to an opened state. Thus, the atomizer 20 sprays the water or the nutrient solution 60, sent by a pump 11 to the atomizer 20 from a tank 12, onto the subterranean part 1A of the plant 1 through a discharge port. In this embodiment, the temperature of the atmosphere inside the underground space 16 becomes lower due to heat of vaporization which occurs when the mist of the water or the nutrient solution 60, sprayed from the atomizer 20, evaporates. Incidentally, the atomizer 20 may be configured to adjust the temperature of the atmosphere inside the underground space 16 by spraying the mist of the water or the nutrient solution 60, whose temperature is adjusted by a heating mechanism (not illustrated) or a heat absorption mechanism (not illustrated), into the underground space 16.

The air temperature adjuster 40 includes: a mechanism for adjusting the temperature of the atmosphere discharged from the inside of the cultivation tank 6 to the outside of the cultivation tank 6; and a mechanism for introducing the atmosphere into the inside of the cultivation tank 6 from the outside of the cultivation tank 6 after the temperature of the atmosphere is adjusted by the adjustment mechanism. To put it simply, the air temperature adjuster 40 is an air conditioner for keeping the temperature of the atmosphere inside the underground space 16 at a predetermined temperature while circulating the atmosphere. The air temperature adjuster 40 is capable of adjusting the atmosphere inside the underground space 16 independently of the atmosphere inside the above-ground space 26, and thereby capable of making the temperature inside the underground space 16 become closer to a target temperature more quickly.

The liquid temperature adjuster 78 adjusts the temperature of the water or the nutrient solution 60 supplied into the cultivation tank 6, and thereby adjusts the temperature of the atmosphere existing inside the underground space 16 using the heat or cold which is transferred from the water or the nutrient solution 60 to the atmosphere existing inside the underground space 16. Specifically, the liquid temperature adjuster 78 includes a heater 70 and a chiller 80. The liquid temperature adjuster 78 adjusts the temperature of the atmosphere inside the underground space 16 using the heater 70 or the chiller 80 depending on the temperature of the atmosphere inside the underground space 16. This makes it possible to adjust the temperature inside the underground space 16 using a circulation passage of the water or the nutrient solution 60 which are needed for the hydroponics. For this reason, the adjustment of the temperature inside the underground space 16 can be achieved using only the liquid temperature adjuster 78 to adjust the temperature inside the underground space 16, without additionally providing a circulation passage for a medium for transferring heat to the underground space 16.

This embodiment employs the cultivation method in which the atomizer 20 irrigates the plant 1. Incidentally, the plant 1 may be irrigated by thin film hydroponics, or a nutrient film technique (NFT). Otherwise, the plant 1 may be irrigated by deep flow hydroponic, or a deep flow technique (DFT). In a case where the irrigation is performed by NFT or DFT, the underground space 16 does not have to be substantially closed. Nevertheless, in the hydroponic cultivation apparatus 100 of this embodiment, the underground space 16 is substantially closed for the purpose of putting the underground space 16 in the dark and controlling the temperature inside the underground space 16.

The hydroponic cultivation apparatus 100 illustrated in Fig. 1 adjusts the temperature inside the underground space 16 using the three components, that is to say, the atomizer 20, the air temperature adjuster 40, and the liquid temperature adjuster 78 in combination. However, the hydroponic cultivation apparatus 100 may adjust the temperature inside the underground space 16 using any one of the atomizer 20, the air temperature adjuster 40 and the liquid temperature adjuster 78. Otherwise, the hydroponic cultivation apparatus 100 may adjust the temperature inside the underground space 16 using any two of the atomizer 20, the air temperature adjuster 40, and the liquid temperature adjuster 78 in combination.

The hydroponic cultivation apparatus 100 includes an image capturing unit 95. The image capturing unit 95 is a generally-used video camera. The image capturing unit 95, however, may be an infrared camera which distinguishes the plant 1 from the objects around the plant 1 based on the temperature of the plant 1. The image capturing unit 95 obtains image data on the aerial part 1B of the plant 1, and sends the image data to the controller 50.

The controller 50 controls the light emitter 5. Furthermore, the controller 50 controls the atomizer 20, the air temperature adjuster 40 and the liquid temperature adjuster 78 based on the information on the temperature of the atmosphere inside the underground space 16 which is detected by the underground temperature detector 9. The controller 50 controls the above-ground temperature adjuster 90 based on the information on the temperature of the atmosphere inside the above-ground space 26 which is detected by the above-ground temperature detector 8.

The operation unit 300 is manipulated by the grower of the plant 1, and sends information to the controller 50. The controller 50 is capable of controlling various units based on the information sent from the operation unit 300.

The controller 50 controls the drive of the pump 11. Thereby, the water or the nutrient solution 60 reserved in the tank 12 is supplied to the cultivation tank 6. The water or the nutrient solution 60 in the tank 12 is further supplied to the atomizer 20.

### (Functional Blocks of Hydroponic Cultivation Apparatus)

Using Fig. 2, descriptions will be provided for the functions of the hydroponic cultivation apparatus 100 of the embodiment.

The controller 50 controls the underground temperature adjuster 2478. The controller 50 includes a dormancy determination unit 51 and a temperature controller 54. The dormancy determination unit 51 determines whether the time of cultivation of the plant 1 is a dormant period when the leaves of the aerial part 1B wither. In a case where the dormancy determination unit 51 determines that the time of cultivation of the plant 1 is the dormant period when the leaves of the aerial part 1B of the plant 1 wither, the temperature controller 54 makes the underground temperature adjuster 2478 adjust the temperature of the atmosphere inside the underground space 16 so as to facilitate germination of the plant 1.

Specifically, at least one of the atomizer 20, the air temperature adjuster 40, and the liquid temperature adjuster 78 in the underground temperature adjuster 2478 lowers the temperature of the atmosphere inside the underground space 16. Thus, the dormancy of the plant 1 with withered leaves can be broken. Thereby, the grower of the plant 1 can control the timing of germination of the plant 1 to be hydroponically cultivated.

It does not matter how the temperature controller 54 controls the temperature of the atmosphere inside the underground space 16, as long as the control is capable of breaking the dormancy of the plant 1. For example, the temperature controller 54 may perform a control only to increase the temperature of the atmosphere inside the underground space 16. The temperature controller 54 may perform a control only to decrease the temperature of the atmosphere inside the underground space 16. The control of the temperature of the atmosphere inside the underground space 16 by the temperature controller 54 differs depending on the type of the plant 1 to be grown.

In the embodiment, the temperature controller 54 controls the underground temperature adjuster 2478 so as to: decrease the temperature of the atmosphere inside the underground space 16; and, after a predetermined length of time passes, increase the temperature of the atmosphere inside the underground space 16. This makes it possible to make the plant 1 to be hydroponically cultivated experience the same temperature change from winter to spring as a plant 1 which would be naturally grown. Thus, the plant 1 can be made to feel that it is time to break its dormancy and to start its germination.

It should be noted that in a case where a plant 1 whose aerial part withers in summer is intended to be hydroponically cultivated, the plant 1 needs to be made to experience a temperature change from summer to autumn in order to break the dormancy of the plant 1 and thereby facilitate the germination of the plant 1. In this case, the temperature controller 54 controls the underground temperature adjuster 2478 so as to increase the temperature of the atmosphere inside the underground space 16; and, after a predetermined length of time passes, decrease the temperature of the atmosphere inside the underground space 16.

The temperature controller 54 controls the underground temperature adjuster 2478 and the above-ground temperature adjuster 90 based on the information on the temperature inside the underground space 16 obtained from the underground temperature detector 9, and the information on the temperature inside the above-ground space 26 obtained from the above-ground temperature detector 8. The temperature controller 54 does not control the underground temperature adjuster 2478 in a case where the temperature inside the underground space 16 naturally falls. Thereafter, the temperature controller 54 does not control the underground temperature adjuster 2478 in a case where the temperature inside the underground space 16 naturally rises. In other words, the control by the temperature controller 54 for facilitating the germination of the plant 1 includes not controlling the underground temperature adjuster 2478 at all in the case where the temperature inside the underground space 16 naturally falls at first and thereafter naturally rises. For a plant whose aerial part withers in summer, the control by the temperature controller 54 for facilitating the germination of the plant 1 includes not controlling the underground temperature adjuster 2478 at all in the case where the temperature inside the underground space 16 naturally rises at first and thereafter naturally falls.

There is a case where the dormancy determination unit 51 determines that the time of cultivation of the plant 1 is the dormant period when the leaves of the aerial part 1B of the plant 1 wither. In this case, the controller 50 controls the light emitter 5 so as to increase the amount of light to be irradiated onto the aerial part 1B of the plant 1 or decrease the amount of light to be irradiated onto the aerial part 1B of the plant 1 depending on whether the plant 1 is photophilous or sciophilous. This makes it possible to facilitate the breaking of the dormancy of the plant 1 by providing an environment comfortable for the plant 1 to break the dormancy. Thereby, the germination of the plant 1 to be hydroponically cultivated can be facilitated. Depending on the plant 1, the timing of germination of the plant 1 can be moved forward.

The dormancy determination unit 51 determines that the time of cultivation is the dormant period, when a timer T measures a predetermined length of time from a predetermined reference time point. This makes it possible to determine whether the time of cultivation is the dormant period without using any other unit such as a sensor or the image capturing unit 95.

The operation unit 300 of the hydroponic cultivation apparatus 100 of this embodiment includes a cultivation time input unit 301 through which the time of cultivation of the plant 1 can be inputted. Thus, the dormancy determination unit 51 is capable of determining that the time of cultivation of the plant 1 is the dormant period, when information from which it is possible to specify that the time of cultivation of the plant 1 is the dormant period is inputted through the cultivation time input unit 301. This makes it possible for the grower of the plant 1 to determine whether the time of cultivation of the plant 1 is the dormant period, and accordingly to arbitrarily control the timing of breaking the dormancy.

The dormancy determination unit 51 sends a result of determination on whether the time of cultivation of the plant 1 is the dormant period to each of the temperature controller 54 and the a light characteristic determination unit 52. Based on the determination result, the temperature controller 54 controls the underground temperature adjuster 2478. Meanwhile, the light characteristic determination unit 52 sends a lighting controller 55 a determination result which represents a combination of the result of the determination by the light characteristic determination unit 52 and the result of the determination by the dormancy determination unit 51. Based on the combined determination result, the lighting controller 55 controls the light emitter 5. Detailed descriptions will be provided for how these determination results are sent.

Furthermore, the hydroponic cultivation apparatus 100 includes the image capturing unit 95 for obtaining the image data on the aerial part 1B. The controller 50 includes an image processor 53 for: processing the image data obtained by the image capturing unit 95; and thereby extracting predetermined information on the aerial part 1B. The controller 50 includes a memory M for storing a dormancy condition from which it is possible to specify that the time of cultivation is the dormant period. The dormancy determination unit 51 determines whether the time of cultivation is the dormant period, depending on whether the predetermined information extracted by the image processor 53 includes information which satisfies the dormancy condition stored in the memory M.

Specifically, a feature point of the leaf shape of the plant 1 is stored in the memory M in advance. In a case where the image data on the aerial part 1B obtained by the image capturing unit 95 does not include the feature point of the leaf shape stored in the memory M, the dormancy determination unit 51 determines that the time of cultivation of the plant 1 is the dormant period. The feature point may be information on any of the leaf color, the leaf outer-edge shape, the leaf outer-edge curvature, the leaf vein shape, the leaf extending direction, the leaf temperature, or the like. This makes it possible to automatically determine whether the cultivation time is the dormant period.

The image processor 53 compares the data on the image of the aerial part 1B of the plant 1 captured by the image capturing unit 95 with image data on the aerial parts of a plurality of types of plants which are stored in the memory M. The image processor 53 performs a process of determining whether the data on the image captured by the image capturing unit 95 includes a feature point identical to any one of the feature points included in the image data on the aerial parts of the multiple types of plants which are stored in the memory M, and sends the result of the process to the light characteristic determination unit 52.

Furthermore, the image processor 53 processes the image data obtained by the image capturing unit 95, and thereby extracts specific information on the aerial part 1B. The controller 50 includes a memory M for storing a photophyte condition specifying that the plant 1 is a plant which is photophilous during its germination, and a sciophyte condition specifying that the plant 1 is a plant which is sciophilous during its germination. The light characteristic determination unit 52 determines which of the photophyte condition and the sciophyte condition stored in the memory M is included in the specific information extracted by the image processor 53. Thereby, it is determined whether the plant 1 is a plant which is photophilous during its germination or a plant which is sciophilous during its germination.

Specifically, there is a case where the image data obtained by the image capturing unit 95 includes information on the feature point of a plant which is photophilous (or a plant which is sciophilous) during its germination, stored in the memory M in advance. In this case, the light characteristic determination unit 52 determines that the plant 1 is a plant which is photophilous (or a plant which is sciophilous) during its germination. This makes it possible to automatically determine whether the plant 1 is a plant which is photophilous during its germination or a plant which is sciophilous during its germination. In a case where the dormancy determination unit 51 determines that the time of cultivation of the plant 1 is the dormant period, the light characteristic determination unit 52 sends the lighting controller 55 a result of determination on whether the plant 1 is a plant which is photophilous during its germination or a plant which is sciophilous during its germination.

It should be noted that the determination on whether the plant 1 is a plant which is photophilous during its germination or a plant which is sciophilous during its germination may be made using the image data on the aerial part 1B which is obtained by the image capturing unit 95 while leaves and roots grow thick. Otherwise, the determination on whether the plant 1 is the plant 1 which is photophilous during its germination or the plant 1 which is sciophilous during its germination may be made using the image data on the aerial part 1B which is obtained by the image capturing unit 95 while the aerial part 1B withers.

It is usually known in advance, however, whether the plant 1 is a plant which is photophilous during its germination or a plant which is sciophilous during its germination. For this reason, determination on whether the plant 1 is a plant which is photophilous during its germination or a plant which is sciophilous during its germination is not an essential configuration. In this case, depending on whether the plant 1 is a plant which is photophilous during its germination or a plant which is sciophilous during its germination, it may be determined in advance whether to turn on or off the light emitter 5 when the time of cultivation of the plant 1 is the dormant period.

As discussed above, the light characteristic determination unit 52 sends the lighting controller 55 the result of determination on whether the plant 1 is a plant which is photophilous during its germination or a plant which is sciophilous during its germination. Thus, there is a case where: the dormancy determination unit 51 determines that the time of cultivation of the plant 1 is the dormant period; and the light characteristic determination unit 52 determines that the plant 1 is the plant 1 which is photophilous during its germination. In this case, the lighting controller 55 controls the light emitter 5 so as to increase the amount of light to be irradiated onto the aerial part 1B of the plant 1 based on the information on the combination of the two determination results sent from the light characteristic determination unit 52. On the other hand, there is a case where: the light characteristic determination unit 52 determines that the plant 1 is the plant 1 which is sciophilous during its germination; and the dormancy determination unit 51 determines that the time of cultivation of the plant 1 is the dormant period. In this case, the lighting controller 55 controls the light emitter 5 so as to decrease the amount of light to be irradiated onto the aerial part 1B of the plant 1 based on the information on the combination of the two determination results sent from the light characteristic determination unit 52.

The increase in the amount of light to be irradiated onto the aerial part 1B of the plant 1 includes: a change of the light emitter 5 from the turn-off mode to the turn-on mode; an increase in the length of time for which to make the light emitter 5 light up in a day; a change of the light emitter 5 from a small light amount mode to a large light amount mode; and the like. The decrease in the amount of light to be irradiated onto the aerial part 1B of the plant 1 includes: a change of the light emitter 5 from the turn-on mode to the turn-off mode; a decrease in the length of time for which to make the light emitter 5 light up in a day; a change of the light emitter 5 from a large light amount mode to a small light amount mode; and the like.

While the plant 1 is in dormancy in which the leaves of the aerial part 1B wither, the use of the control of the light emitter 5 makes it possible to facilitate the breaking of the dormancy of the plant 1. Thereby, it is possible to facilitate the germination of the plant 1 to be hydroponically cultivated. Particularly in a case where the plant 1 is the plant 1 which is photophilous during its germination, it is preferable that the controller 50 controls the light emitter 5 so as for the light emitter 5 to continue irradiating light onto the plant 1 for 24 hours while the plant 1 is in dormancy. On the other hand, in a case where the plant 1 is the plant 1 which is sciophilous during its germination, it is preferable that the controller 50 controls the light emitter 5 so as for the light emitter 5 to irradiate no light onto the plant 1 for 24 hours while the plant 1 is in dormancy.

The operation unit 300 of the hydroponic cultivation apparatus 100 of this embodiment includes a light characteristic input unit 302 for inputting light characteristic information from which it is possible to specify whether the plant 1 is the plant 1 which is photophilous during its germination or the plant 1 which is sciophilous during its germination. For this reason, the light characteristic determination unit 52 is also capable of determining whether the plant 1 is the plant 1 which is photophilous during its germination or the plant 1 which is sciophilous during its germination, based on the light characteristic information inputted from the light characteristic input unit 302. Since the grower of the plant 1 inputs the light characteristic information, the determination on whether the plant 1 is the plant 1 which is photophilous during its germination or the plant 1 which is sciophilous during its germination can be made using a simpler configuration.

### (Embodiment 1)

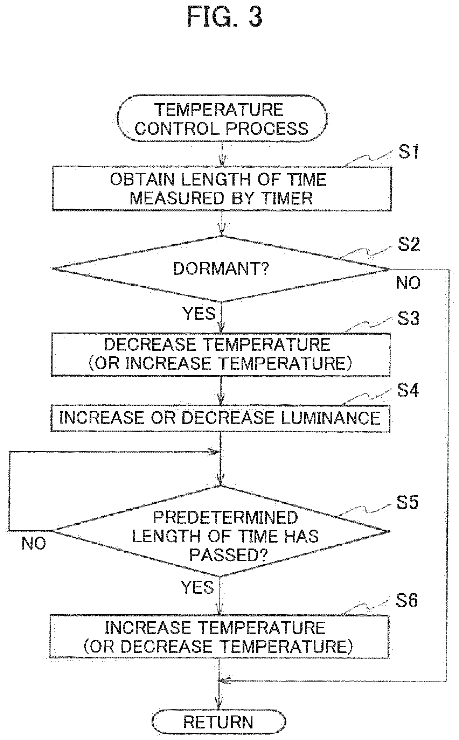

Using Fig. 3, descriptions will be provided for the temperature control process to be performed by the controller 50 of the hydroponic cultivation apparatus 100 of Embodiment 1. The configuration of the hydroponic cultivation apparatus 100 of this embodiment is what already has been discussed using Figs. 1 and 2.

As illustrated in Fig. 3, in the controller 50, the dormancy determination unit 51 obtains information on the length of time to be measured by the timer T in step S1. In step S2, it is determined whether the plant 1 is dormant. In this embodiment, the dormancy determination unit 51 determines that the time of cultivation is the dormant period, in a case where the timer T has measured a predetermined length of time since the predetermined reference time point after the start of the cultivation determined in advance.

The above-mentioned predetermined reference time is determined by the manipulation of the operating unit 300 at the start time of the cultivation. In addition, the above-mentioned predetermined length of time is specified by data on a beforehand-measured length of time from the start of the cultivation to the dormant period.

In a case where in step S2, the timekeeping time of the timer T has not measured a length of time at which the time of cultivation of the plant 1 is expected to be the dormant period, the dormancy determination unit 51 repeats the processes of steps S1 and S2. On the other hand, in a case where in step S2, the timekeeping time of the timer T has measured the length of time at which the time of cultivation of the plant 1 is expected to be the dormant period, the dormancy determination unit 51 the controller 50 performs the processes of step S3 and the subsequent steps.

In step S3, the temperature controller 54 controls the underground temperature adjuster 2478, and thereby decreases the temperature of the atmosphere inside the underground space 16. In this case, the underground temperature controller 54 sends the lighting controller 55 a signal indicating that the underground temperature controller 54 is performing the control of decreasing the temperature of the atmosphere inside the underground space 16. In step S4, the lighting controller 55 thus controls the light emitter 5, and thereby increases or decreases the luminance of the light emitter 5. Accordingly, the germination of the plant 1 can be facilitated.

Whether the lighting controller 55 increases or decreases the luminance of the light emitter 5 is determined in advance by a program for the temperature control process, depending on whether the plant 1 is a photophyte or a sciophyte plant. Specifically, in a case where the plant 1 to be cultivated is a photophyte, the lighting controller 55 controls the light emitter 5 in order to increase the luminance of the light emitter 5 for the purpose of facilitating the germination of the plant 1. On the other hand, in a case where the plant 1 to be cultivated is a sciophyte, the lighting controller 55 controls the light emitter 5 in order to decrease the luminance of the light emitter 5 for the purpose of facilitating the germination of the plant 1.

In step S5, the temperature controller 54 determines whether the timer T has measured the predetermined length of time since the process of step S4 is performed. In a case where in step S5, the timer T has not measured the predetermined length of time yet since the process of step S4 is performed, the temperature controller 54 repeats the determination of step S5. On the other hand, in a case where in step S5, the temperature controller 54 determines that the predetermined length of time has passed since the process of step S4 is performed, the temperature controller 54 considers that it is time to increase the temperature of the atmosphere inside the underground space 16 in order to break the dormancy. Thus, in step S6, the temperature controller 54 controls the underground temperature adjuster 2478, and thereby increases the temperature of the atmosphere inside the underground space 16.

Under the above control by the controller 50, the temperature of the atmosphere inside the underground space 16 falls and then rises. This makes the plant 1 feel the temperature changes as if winter went into spring. Thus, it is possible to break the dormancy of the plant 1 and to facilitate the germination thereof.

### (Embodiment 2)

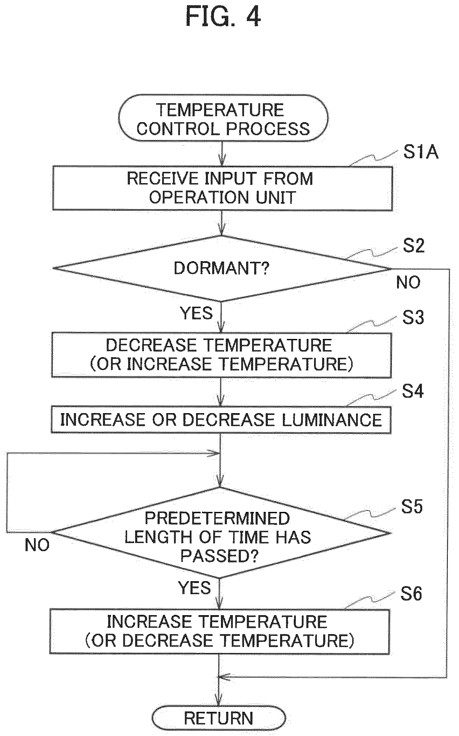

Using Fig. 4, descriptions will be provided for the hydroponic cultivation apparatus 100 of Embodiment 2. The hydroponic cultivation apparatus 100 of this embodiment has the substantially same configuration and functions as the hydroponic cultivation apparatus 100 of Embodiment 1. Descriptions for the configuration and functions common to the hydroponic cultivation apparatus 100 of this embodiment and the hydroponic cultivation apparatus 100 of Embodiment 1 will not be repeated.

As illustrated in Fig. 4, the hydroponic cultivation apparatus 100 of this embodiment performs the temperature control process using the controller 50 such that in step S1A, the dormancy determination unit 51 receives input information that has been sent from the operation unit 300 based on the manipulation of the operation unit 300. Only the process of step S1A makes the temperature control process by the controller 50 of the hydroponic cultivation apparatus 100 of this embodiment illustrated in Fig. 4 different from the temperature control process by the controller 50 of the hydroponic cultivation apparatus 100 of Embodiment 1 illustrated in Fig. 3.

As illustrated in Fig. 4, in the temperature control process to be performed by the hydroponic cultivation apparatus of this embodiment as well, the controller 50 determines in step S2 whether the time of cultivation of the plant 1 is the dormant period. In this embodiment, however, the dormancy determination unit 51 determines in step S2 that the time of cultivation of the plant 1 is the dormant period when information from which it is possible to specify that the time of cultivation is the dormant period is inputted using the cultivation time input unit 301. By manipulating the operation unit 300 for the process, the grower of the plant 1 sends the dormancy determination unit 51 the information from which it is possible to specify that the time of cultivation is the dormant period. In other words, the hydroponic cultivation apparatus 100 of this embodiment and the hydroponic cultivation apparatus 100 of Embodiment 1 are different from each other only in terms of how to determine whether the time of cultivation of the plant 1 is the dormant period, and are common to each other in the other respects.

The temperature control process by the hydroponic cultivation apparatus 100 of this embodiment is also capable of breaking the dormancy of the plant 1 and facilitating the germination thereof.

### (Embodiment 3)

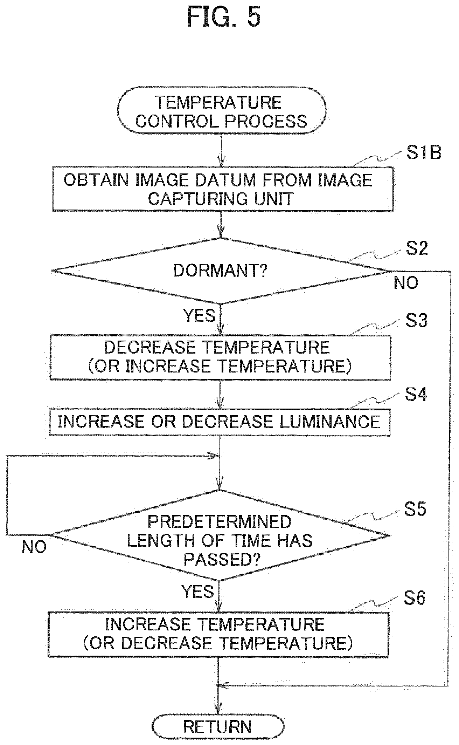

Using Fig. 5, descriptions will be provided for the hydroponic cultivation apparatus 100 of Embodiment 3. The hydroponic cultivation apparatus 100 of this embodiment has the substantially same configuration and functions as the hydroponic cultivation apparatus 100 of Embodiment 1. Descriptions for the configuration and functions common to the hydroponic cultivation apparatus 100 of this embodiment and the hydroponic cultivation apparatus 100 of Embodiment 1 will not be repeated.

As illustrated in Fig. 5, the hydroponic cultivation apparatus 100 of this embodiment performs the temperature control process using the controller 50 such that in step S1B, the dormancy determination unit 51 obtains a result of the process by the image processor 53 based on the image data on the aerial part 1B of the plant 1 which is obtained by the image capturing unit 95. Only the process of step S1B makes the temperature control process by the controller 50 of the hydroponic cultivation apparatus 100 of this embodiment illustrated in Fig. 5 different from the temperature control process by the controller 50 of the hydroponic cultivation apparatus 100 of Embodiment 1 illustrated in Fig. 3.

As illustrated in Fig. 5, in the temperature control process to be performed by the hydroponic cultivation apparatus of this embodiment as well, the controller 50 determines in step S2 whether the time of cultivation of the plant 1 is the dormant period. In this embodiment, in step S2, the dormancy determination unit 51 determines that the time of cultivation is the dormant period, based on the image data obtained by the image capturing unit 95. Specifically, a comparison is made between the image data on the aerial parts of the plants in dormancy, which are obtained in advance, and the image data on the aerial part 1B of the plant 1, which is actually obtained by the image capturing unit 95. In this case, if the aerial part 1B has no leaves, it is determined that the time of cultivation of the plant 1 is the dormant period. The leaf shape is specified by the leaf color. In other words, the hydroponic cultivation apparatus 100 of this embodiment and the hydroponic cultivation apparatus 100 of Embodiment 1 are different from each other only in terms of how to determine whether the time of cultivation of the plant 1 is the dormant period, and are common to each other in the other respects.

The temperature control process by the hydroponic cultivation apparatus 100 of this embodiment is also capable of breaking the dormancy of the plant 1 and facilitating the germination thereof.

### (Embodiment 4)

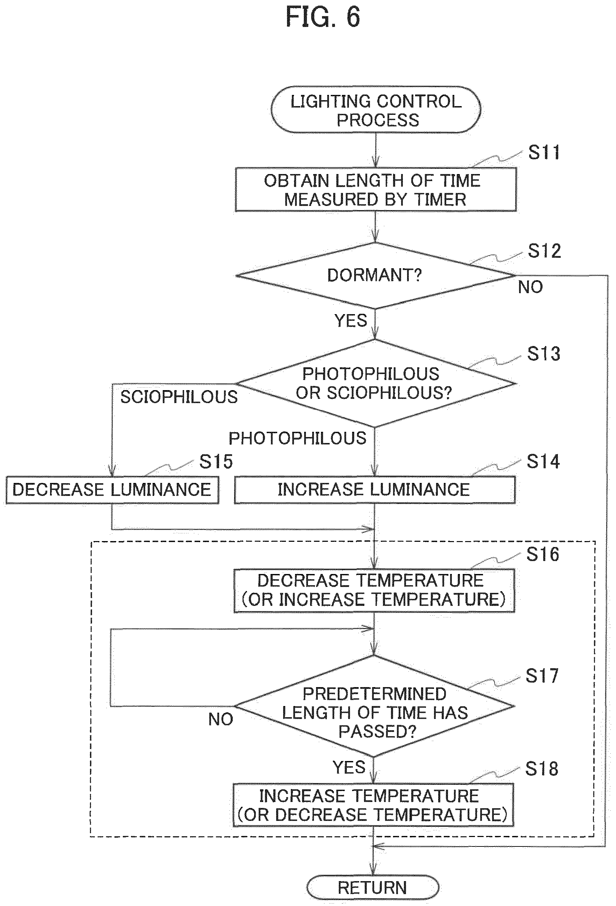

Using Fig. 6, descriptions will be provided for the temperature control process to be performed by the controller 50 of the hydroponic cultivation apparatus 100 of Embodiment 4. The configuration of the hydroponic cultivation apparatus 100 of this embodiment is what has already been discussed using Figs. 1 and 2.

In the hydroponic cultivation apparatus 100 of this embodiment, the controller 50 performs a lighting control process illustrated in Fig. 6, instead of the temperature control processes illustrated in Figs. 3 to 5 which are performed by the hydroponic cultivation apparatuses 100 of the above-discussed Embodiments 1 to 3.

As illustrated in Fig. 6, in step S11, the dormancy determination unit 51 obtains information on the length of time measured by the timer T. In step S12, the controller 50 determines whether the time of cultivation of the plant 1 is the dormant period. Specifically, the dormancy determination unit 51 determines that the time of cultivation is the dormant period, in a case where the timer T has measured the predetermined length of time since the predetermined reference time point after the start of the cultivation determined in advance. The above-mentioned predetermined reference time is determined by the manipulation of the operating unit 300 at the start time of the cultivation. In addition, the above-mentioned predetermined length of time is specified by data on a beforehand-measured length of time from the start of the cultivation to the dormant period. In a case where it is not determined in step S12 that the time of cultivation of the plant 1 is the dormant period, the processes of steps S11 and S12 are repeated.

In a case where in step S12, it is determined that the time of cultivation is the dormant period, the light characteristic determination unit 52 determines in step S13 whether the plant 1 is a photophyte or a sciophyte.

In a case where in step S13, the light characteristic determination unit 52 determines that the plant 1 is a photophyte, the lighting controller 55 in step S14 turns on the light emitter 5, or increases the amount of light to be emitted by the light emitter 5. On the other hand, in a case where the light characteristic determination unit 52 determines that the plant 1 is a sciophyte, the lighting controller 55 in step S15 turns off the light emitter 5, or decreases the amount of light to be emitted by the light emitter 5.

No matter which of a photophyte or a sciophyte the plant 1 is, the temperature controller 54 in step S16 decreases the temperature of the atmosphere inside the underground space 16 by controlling the underground temperature adjuster 2478 in a case where the time of cultivation of the plant 1 is the dormant period.

In step S17, the temperature controller 54 determines whether the timer T has measured a predetermined length of time since the process of step S16 is performed. In a case where in step S17, the timer T has not measured the predetermined length of time yet, the determination of step S17 is repeated. On the other hand, in a case where in step S17, the temperature controller 54 determines that the predetermined length of time has passed, the temperature controller 54 considers that it is time to increase the temperature of the atmosphere inside the underground space 16 in order to break the dormancy. Thus, in step S18, the temperature controller 54 controls the underground temperature adjuster 2478, and thereby increases the temperature of the atmosphere inside the underground space 16. This makes the plant 1 feel the temperature changes as if winter went into spring, like in Embodiment 1. Thus, it is possible to break the dormancy of the plant 1 and to facilitate the germination thereof.

In the case where the time of cultivation of the plant 1 is the dormant period, if the temperature inside the underground space 16 naturally falls and then rises, the controller 50 does not have to perform the processes of steps S16 to S18.

### (Embodiment 5)

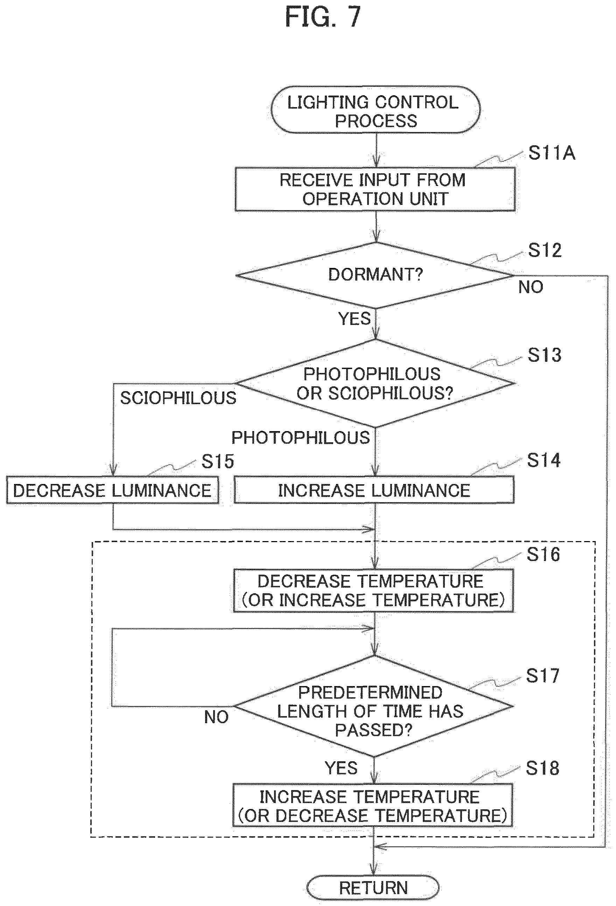

Using Fig. 7, descriptions will be provided for the hydroponic cultivation apparatus 100 of Embodiment 5. The hydroponic cultivation apparatus 100 of this embodiment has the substantially same configuration and functions as the hydroponic cultivation apparatus 100 of Embodiment 4. Descriptions for the configuration and functions common to the hydroponic cultivation apparatus 100 of this embodiment and the hydroponic cultivation apparatus 100 of Embodiment 4 will not be repeated.

As illustrated in Fig. 7, the hydroponic cultivation apparatus 100 of this embodiment performs the temperature control process using the controller 50 such that in step S11A, the dormancy determination unit 51 receives input information that has been sent from the operation unit 300 based on the manipulation of the operation unit 300. Only the process of step S11A makes the temperature control process by the controller 50 of the hydroponic cultivation apparatus 100 of this embodiment illustrated in Fig. 7 different from the temperature control process by the controller 50 of the hydroponic cultivation apparatus 100 of Embodiment 4 illustrated in Fig. 6.

As illustrated in Fig. 7, in the temperature control process to be performed by the hydroponic cultivation apparatus of this embodiment as well, the controller 50 determines in step S12 whether the time of cultivation of the plant 1 is the dormant period. In this embodiment, however, the dormancy determination unit 51 determines in step S12 that the time of cultivation of the plant 1 is the dormant period when information from which it is possible to specify that the time of cultivation is the dormant period is inputted using the cultivation time input unit 301. By manipulating the operation unit 300 for the process, the grower of the plant 1 sends the dormancy determination unit 51 the information from which it is possible to specify that the time of cultivation is the dormant period. In other words, the hydroponic cultivation apparatus 100 of this embodiment and the hydroponic cultivation apparatus 100 of Embodiment 1 are different from each other only in terms of how to determine whether the time of cultivation of the plant 1 is the dormant period, and are common to each other in the other respects.

The temperature control process by the hydroponic cultivation apparatus 100 of this embodiment is also capable of breaking the dormancy of the plant 1 and facilitating the germination thereof.

### (Embodiment 6)

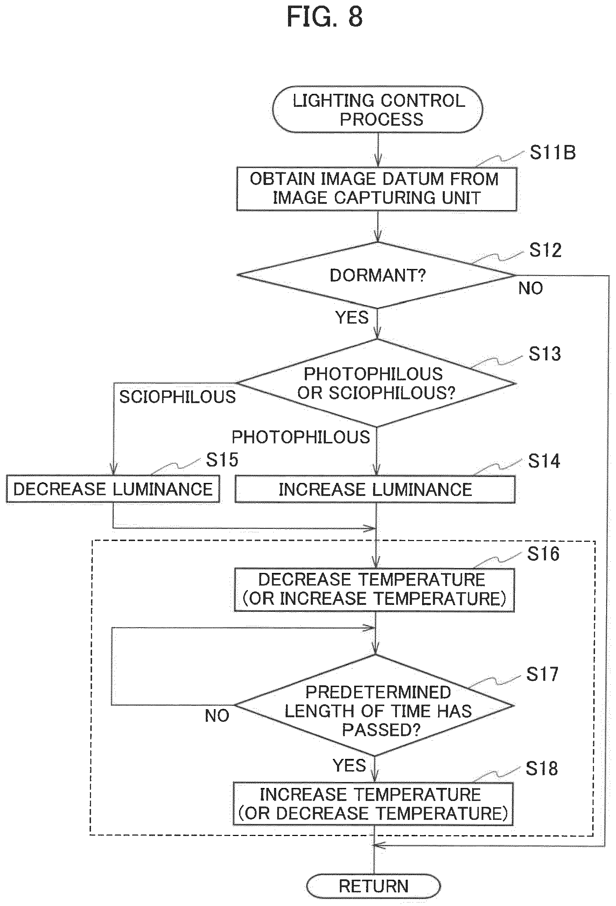

Using Fig. 8, descriptions will be provided for the hydroponic cultivation apparatus 100 of Embodiment 6. The hydroponic cultivation apparatus 100 of this embodiment has the substantially same configuration and functions as the hydroponic cultivation apparatus 100 of Embodiment 4. Descriptions for the configuration and functions common to the hydroponic cultivation apparatus 100 of this embodiment and the hydroponic cultivation apparatus 100 of Embodiment 4 will not be repeated.

As illustrated in Fig. 8, the hydroponic cultivation apparatus 100 of this embodiment performs the lighting control process such that in step S11B, the dormancy determination unit 51 obtains a result of the process by the image processor 53 based on the image data on the aerial part 1B of the plant 1 which is obtained by the image capturing unit 95. Only the process of step S11B makes the lighting control process by the controller 50 of the hydroponic cultivation apparatus 100 of this embodiment illustrated in Fig. 8 different from the lighting control process by the controller 50 of the hydroponic cultivation apparatus 100 of Embodiment 4 illustrated in Fig. 6.

In the lighting control process to be performed by the hydroponic cultivation apparatus of this embodiment as well, the controller 50 determines in step S12 whether the time of cultivation of the plant 1 is the dormant period. In this embodiment, however, the dormancy determination unit 51 determines in step S12 that the time of cultivation is the dormant period, based on the image data obtained by the image capturing unit 95. Specifically, a comparison is made between the image data on the aerial parts of the plants in dormancy, which are obtained in advance, and the image data on the aerial part 1B of the plant 1, which is actually obtained by the image capturing unit 95. More specifically, the dormancy determination unit 51 sends the image processor 53 the image data obtained by the image capturing unit 95. The image processor 53 extracts the predetermined information on the plant 1. The dormancy determination unit 51 compares the predetermined information on the plant 1 extracted by the image processor 53 with dormancy information specifying that the time of cultivation of the plant 1 is the dormant period, which is stored in the memory M in advance. Based on a result of the comparison, the dormancy determination unit 51 determines whether the time of cultivation is the dormant period. In this case, if the aerial part 1B has no leaves, it is determined that the time of cultivation of the plant 1 is the dormant period. The leaf shape is specified by the leaf color. In other words, the hydroponic cultivation apparatus 100 of this embodiment and the hydroponic cultivation apparatus 100 of Embodiment 4 are different from each other only in terms of how to determine whether the time of cultivation of the plant 1 is the dormant period, and are common to each other in the other respects.

The temperature control process by the hydroponic cultivation apparatus 100 of this embodiment is also capable of breaking the dormancy of the plant 1 and facilitating the germination thereof.

### (Embodiment 7)

Descriptions will be provided for the temperature control process and the lighting control process to be performed by the controller 50 of the hydroponic cultivation apparatus 100 of Embodiment 7. The configuration of the hydroponic cultivation apparatus 100 of this embodiment is what has already been discussed using Figs. 1 and 2. Furthermore, the processes to be performed by the controller 50 of the hydroponic cultivation apparatus 100 of this embodiment are basically the same as those in Embodiments 1 to 6.

In this embodiment, the dormancy of the plant 1 which is dormant in summer so that its aerial part withers is broken. To this end, in this embodiment, the controller 50 controls the underground temperature adjuster 2478 so as to make the plant 1 feel that the temperature changes as if summer went into autumn. For this reason, only steps S3 and S6 in Figs. 3, 4 and 5 make the temperature control process by the controller 50 of this embodiment different from the temperature control process by the controllers 50 of the hydroponic cultivation apparatuses 100 of Embodiments 1 to 3. Furthermore, only steps S16 and S18 in Figs. 6, 7 and 8 make the temperature control process by the controller 50 of this embodiment different from the temperature control process by the controllers 50 of the hydroponic cultivation apparatuses 100 of Embodiments 4 to 6.

Specifically, the controller 50 controls the underground temperature adjuster 2478 so as to, at first, increase the temperature inside the underground space 16 in step S3 illustrated in Figs. 3, 4 and 5 or in step S16 illustrated in Figs. 6, 7 and 8. Thereafter, the controller 50 controls the underground temperature adjuster 2478 so as to decrease the temperature inside the underground space 16 in step S6 illustrated in Figs. 3, 4 and 5 or in step S18 illustrated in Figs. 6, 7 and 8. This makes it possible to break the dormancy of even the plant 1 whose aerial part 1B withers in summer and to facilitate the germination thereof.

### (Embodiment 8)

Descriptions will be provided for the lighting control process to be performed by the controller 50 of the hydroponic cultivation apparatus 100 of Embodiment 8. The configuration of the hydroponic cultivation apparatus 100 of this embodiment is what has already been discussed using Figs. 1 and 2. Furthermore, the processes to be performed by the controller 50 of the hydroponic cultivation apparatus 100 of this embodiment are basically the same as those in Embodiments 4 to 6.

The controller 50 of this embodiment does not perform the processes of steps S16 to S18 which are performed by the controllers 50 of the hydroponic cultivation apparatuses 100 of Embodiments 4 to 6, and which are illustrated in Figs. 6, 7 and 8.

In other words, this embodiment allows the temperature of the atmosphere inside the underground space 16 to naturally rise (or fall) depending on a change in temperature of the surrounding environment, without the controller 50 performing the processes of steps S16 to S18 in Figs. 6, 7 and 8. Thereafter, this embodiment allows the temperature of the atmosphere inside the underground space 16 to naturally fall (or rise) depending on the change in temperature of the surrounding environment, without the controller 50 performing the processes of steps S16 to S18 in Figs. 6, 7 and 8. However, the controller 50 performs the same processes as those of steps S11 to S15 in Fig. 6, steps S11A to S15 in Fig. 7, and steps S11B to S15 in Fig. 8.

In the case where the temperature of the surrounding environment naturally changes for the dormancy break, the hydroponic cultivation apparatus 100 of this embodiment is capable of changing how the light emitter 5 emits light depending on the light characteristic of the plant 1, that is to say, whether the plant 1 is photophilous or sciophilous during its germination. For this reason, unlike the hydroponic cultivation apparatuses 100 of the above-discussed embodiments, the hydroponic cultivation apparatus 100 of this embodiment is capable of facilitating the germination of the plant 1 without adjusting the change in the temperature inside the underground space 16 by the controller 50 controlling the underground temperature adjuster 2478.

### (Feature Configurations and Effects of Embodiments)

Descriptions will be hereinbelow provided for feature configurations of the hydroponic cultivation apparatuses 100 of the embodiments, and effects obtained from them.
(1) Each hydroponic cultivation apparatus 100 includes the cultivation chamber underground portion 67, the underground temperature adjuster 2478, and the controller 50. The cultivation chamber underground portion 67 internally includes the underground space 16 where the subterranean part 1A of the plant 1 grows such that the underground space 16 is separated from the above-ground space 26 where the aerial part 1B of the plant 1 grows. The underground temperature adjuster 2478 adjusts the temperature of the atmosphere inside the underground space 16. The controller 50 controls the underground temperature adjuster 2478. The controller 50 includes the dormancy determination unit 51 and the temperature controller 54. The dormancy determination unit 51 determines whether the time of cultivation of the plant 1 is the dormant period when the leaves of the aerial part 1B wither. When the dormancy determination unit 51 determines that the time of cultivation is the dormant period, the temperature controller 54 makes the underground temperature adjuster 2478 adjusts the temperature of the atmosphere inside the underground space 16 so as to facilitate the germination of the plant 1.
   The foregoing configuration makes it possible to break the dormancy of the plant 1 whose aerial part 1B withers. This makes it possible for the grower of the plant 1 to facilitate the germination of the plant 1 to be hydroponically cultivated. Furthermore, since the temperature of only the atmosphere inside the underground space 16 is adjusted, it is possible to save the amount of energy to be consumed for the temperature adjustment.
(2) The temperature controller 54 may control the underground temperature adjuster so as to decrease the temperature of the atmosphere inside the underground space, and thereafter increase the temperature of the atmosphere inside the underground space when a predetermined length of time passes.
   The foregoing configuration is capable of making the hydroponically cultivated plant 1 experience the same temperature change as the naturally grown plant 1 would experience while winter goes into spring. Thus, the foregoing configuration is capable of making the plant 1 feel that it is time to break its dormancy.
(3) The underground temperature adjuster 2478 may include at least one of the atomizer 20, the air temperature adjuster 40 and the liquid temperature adjuster 78. The atomizer 20 supplies the mist of the water or the nutrient solution 60 to the underground space 16. The air temperature adjuster 40 supplies the gas at the predetermined temperature to the underground space 16 from the outside. The liquid temperature adjuster 78 adjusts the temperature of the water or the nutrient solution 60 contained in the underground space 16.
   The air temperature adjuster 40 is capable of directly adjusting the temperature of the atmosphere inside the underground space 16. Thus, the air temperature adjuster 40 is capable of quickly adjusting the temperature of the atmosphere inside the underground space 16. Since the roots 1C are immersed in the water or the nutrient solution 60, the liquid temperature adjuster 78 is capable of adjusting the temperature inside the underground space 16 while supplying the water or the nutrient solution 60 to the roots 1C. The atomizer 20 is capable of adjusting the humidity inside the underground space 16, and concurrently adjusting the temperature inside the underground space 16 as well.
(4) It is preferable that the hydroponic cultivation apparatus 1 includes the light emitter 5 for irradiating the light onto the aerial part 1B. It is preferable that the controller 50 controls the light emitter 5 so as to increase an amount of light to be irradiated onto the aerial part 1B or decrease an amount of light to be irradiated onto the aerial part 1B, in the case where the dormancy determination unit determines that the time of cultivation is the dormant period.
   The foregoing configuration makes it possible to facilitate the breaking of the dormancy of the plant 1 by providing the plant 1 with an environment comfortable for the plant 1 to break its dormancy. This makes it possible to facilitate the germination of the plant 1 to be hydroponically cultivated. Depending on the plant 1, for example, the timing of its germination can be moved forward.
(5) The hydroponic cultivation apparatus 100 includes the light emitter 5 for irradiating the light onto the aerial part 1B of the plant 1, and the controller 50 for controlling the light emitter 5. The controller 50 includes the dormancy determination unit 51, the light characteristic determination unit 52, and the lighting controller 55.
   The dormancy determination unit 51 determines whether the time of cultivation of the plant 1 is the dormant period when the leaves of the aerial part 1B wither. The light characteristic determination unit 52 determines whether the plant 1 is the plant 1 which is photophilous during its germination or the plant 1 which is sciophilous during its germination. There is a case where: the dormancy determination unit 51 determines that the time of cultivation is the dormant period; and the light characteristic determination unit 52 determines that the plant 1 is the plant 1 which is photophilous during its germination. In this case, the lighting controller 55 controls the light emitter 5 so as to increase the amount of light to be irradiated onto the aerial part 1B. On the other hand, there is a case where: the dormancy determination unit 51 determines that the time of cultivation is the dormant period; and the light characteristic determination unit 52 determines that the plant 1 is the plant 1 which is sciophilous during its germination. In this case, the lighting controller 55 controls the light emitter 5 so as to decrease the amount of light to be irradiated onto the aerial part 1B.
   When the plant 1 is in dormancy so that the aerial part 1B withers, the use of the foregoing control makes it possible to facilitate the breaking of the dormancy of the plant 1. This makes it possible to facilitate the germination of the plant 1 to be hydroponically cultivated.
(6) It is preferable that the hydroponic cultivation apparatus 100 includes a light characteristic input unit 302 for inputting light characteristic information from which it is possible to specify whether the plant 1 is the plant 1 which is photophilous during its germination or the plant 1 which is sciophilous during its germination. In this case, the light characteristic determination unit 52 determines whether the plant 1 is the plant 1 which is photophilous during its germination or the plant 1 which is sciophilous during its germination, based on the light characteristic information inputted by the light characteristic input unit 302.
   The foregoing configuration allows the grower of the plant 1 to input the light characteristic information. For this reason, the determination on whether the plant 1 is the plant 1 which is photophilous during its germination or the plant 1 which is sciophilous during its germination can be achieved using the simpler configuration.
(7) The hydroponic cultivation apparatus may include an image capturing unit 95 which obtains image data on the aerial part 1B. The controller 50 may include an image processor 53 which processes the image data obtained by the image capturing unit 95, and thereby extracting specific information on the aerial part 1B. In addition, the controller 50 may include a memory M which stores a photophyte condition which specifies that the plant 1 is the plant 1 which is photophilous during its germination, and a sciophyte condition which specifies that the plant 1 is the plant 1 which is sciophilous during its germination. The light characteristic determination unit 52 may determine which of information satisfying the photophyte condition stored in the memory M and information satisfying the sciophyte condition stored in the memory M is included in the specific information extracted by the image processor 53. Thereby, whether the plant 1 is the plant 1 which is photophilous during its germination or the plant 1 which is sciophilous during its germination may be determined.
   The foregoing configuration makes it possible to automatically determine whether the plant 1 is the plant 1 which is photophilous during its germination or the plant 1 which is sciophilous during its germination
(8) The hydroponic cultivation apparatus 100 may include the underground temperature adjuster 2478 and the controller 50. The underground temperature adjuster 2478 adjusts the temperature of the atmosphere inside the underground space 16. The controller 50 may control the underground temperature adjuster 2478. In the case where the dormancy determination unit 51 determines that the time of cultivation is the dormant period, the temperature controller 54 may make the underground temperature adjuster 2478 adjust the temperature of the atmosphere inside the underground space 16 so as to facilitate the germination of the plant 1.
   The foregoing configuration makes it possible for the grower of the plant 1 to arbitrarily break the dormancy of the plant 1 by actively controlling the temperature of the atmosphere inside the underground space 16 without waiting for a natural change in temperature.
(9) The controller 50 may include the timer T which starts to measure the length of time from the reference time point after the start of the cultivation of the plant 1. In this case, the dormancy determination unit 51 may determine whether the time of cultivation is the dormant period, depending on whether the timer T has measured the predetermined length of time since the predetermined reference time point after the start of the cultivation of the plant 1. This makes it possible to determine whether the time of cultivation is the dormant period without using any other unit such as a sensor or the image capturing unit 95.
(10) The hydroponic cultivation apparatus 100 may include a cultivation time input unit 301 through which the time of cultivation can be inputted. In this case, the dormancy determination unit 51 may determine that the time of cultivation is the dormant period, depending on whether the information from which it is possible to specify that the time of cultivation is the dormant period is inputted from the cultivation time input unit 301. This makes it possible for the grower of the plant 1 to determine whether the time of cultivation is the dormant period. Accordingly, the grower can arbitrarily adjust the timing of breaking the dormancy.
(11) The hydroponic cultivation apparatus 100 may include an image capturing unit 95 which obtains image data on the aerial part 1B. The controller 50 may include an image processor 53 which processes the image data obtained by the image capturing unit 95, and thereby extracting specific information on the aerial part 1B, and a memory M which stores a dormancy condition from which it is possible to specify that the time of cultivation is the dormant period. In this case, the dormancy determination unit 51 determines whether the time of cultivation is the dormant period, depending on whether the specific information extracted by the image processor 53 includes information which satisfies the dormancy condition stored in the memory M. This makes it possible to automatically determine whether the time of cultivation is the dormant period.

This application claims the benefit of priority based on Japanese Patent Application No. 2015-112106, filed on June 2, 2015, the entire contents of which is incorporated herein by reference.

### REFERENCE SIGNS LIST

- 1: Plant
- 1A: Subterranean part
- 1B: Aerial part
- 5: Light emitter
- 16: Underground space
- 20: Atomizer
- 40: Air temperature adjuster
- 50: Controller
- 51: Dormancy determination unit
- 52: Light characteristic determination unit
- 53: Image processor
- 54: Temperature controller
- 55: Lighting controller
- 60: Nutrient solution
- 67: Cultivation chamber underground portion
- 78: Liquid temperature adjuster
- 95: Image capturing unit
- 100: Hydroponic cultivation apparatus
- 301: Cultivation time input unit
- 302: Light characteristic input unit
- 2478: Underground temperature adjuster
- M: Memory
- T: Timer

## Claims

1. A hydroponic cultivation apparatus comprising:
a cultivation chamber underground portion internally including an underground space where a subterranean part of a plant grows such that the underground space is separated from an above-ground space where an aerial part of the plant grows;
an underground temperature adjuster which adjusts a temperature of an atmosphere inside the underground space; and
a controller which controls the underground temperature adjuster, wherein
the controller includes
a dormancy determination unit which determines whether a time of cultivation of the plant is a dormant period when leaves of the aerial part wither, and
a temperature controller which makes the underground temperature adjuster adjust the temperature of the atmosphere inside the underground space so as to facilitate germination of the plant in a case where the dormancy determination unit determines that the time of cultivation is the dormant period.

2. The hydroponic cultivation apparatus according to claim 1, wherein
the temperature controller controls the underground temperature adjuster so as to decrease the temperature of the atmosphere inside the underground space, and thereafter increase the temperature of the atmosphere inside the underground space when a predetermined length of time passes.

3. The hydroponic cultivation apparatus according to claim 1 or 2, wherein
the underground temperature adjuster includes at least one of
an atomizer which supplies mist of water or a nutrient solution to the underground space,
an air temperature adjuster which supplies a gas at a predetermined temperature from an outside to the underground space, and
a liquid temperature adjuster which adjusts a temperature of the water or the nutrient solution contained in the underground space.

4. The hydroponic cultivation apparatus according to any one of claims 1 to 3, further comprising:
a light emitter which irradiates light onto the aerial part, wherein
the controller controls the light emitter so as to increase or decrease an amount of light to be irradiated onto the aerial part, in the case where the dormancy determination unit determines that the time of cultivation is the dormant period.

5. A hydroponic cultivation apparatus comprising:
a cultivation chamber underground portion internally including an underground space where a subterranean part of a plant grows such that the underground space is separated from an above-ground space where an aerial part of the plant grows;
a light emitter which is provided in the above-ground space and irradiates light onto the aerial part; and
a controller which controls the light emitter, wherein
the controller includes
a dormancy determination unit which determines whether a time of cultivation of the plant is a dormant period when leaves of the aerial part wither,
a light characteristic determination unit which determines whether the plant is a plant which is photophilous during its germination or a plant which is sciophilous during its germination, and
a lighting controller which controls the light emitter so as to
increase an amount of light to be irradiated onto the aerial part in a case where the dormancy determination unit determines that the time of cultivation is the dormant period, and the light characteristic determination unit determines that the plant is the plant which is photophilous during its germination, and
decrease the amount of light to be irradiated onto the aerial part in a case where the dormancy determination unit determines that the time of cultivation is the dormant period, and the light characteristic determination unit determines that the plant is the plant which is sciophilous during its germination.

6. The hydroponic cultivation apparatus according to claim 5, further comprising:
a light characteristic input unit which inputs light characteristic information from which it is possible to specify whether the plant is the plant which is photophilous during its germination or the plant which is sciophilous during its germination, wherein
the light characteristic determination unit determines whether the plant is the plant which is photophilous during its germination or the plant which is sciophilous during its germination, based on the light characteristic information inputted by the light characteristic input unit.

7. The hydroponic cultivation apparatus according to claim 5 or 6, further comprising:
an image capturing unit which obtains image data on the aerial part, wherein
the controller includes
an image processor which processes the image data obtained by the image capturing unit, and thereby extracting specific information on the aerial part, and
a memory which stores a photophyte condition which specifies that the plant is the plant which is photophilous during its germination, and a sciophyte condition which specifies that the plant is the plant which is sciophilous during its germination, and
the light characteristic determination unit determines which of information satisfying the photophyte condition stored in the memory and information satisfying the sciophyte condition stored in the memory is included in the specific information extracted by the image processor, and thereby determines whether the plant is the plant which is photophilous during its germination or the plant which is sciophilous during its germination.

8. The hydroponic cultivation apparatus according to any one of claims 5 to 7, further comprising:
an underground temperature adjuster which adjusts a temperature of an atmosphere inside the underground space; and
a controller which controls the underground temperature adjuster, wherein
the controller includes a temperature controller which makes the underground temperature adjuster adjust the temperature of the atmosphere inside the underground space so as to facilitate the germination of the plant, in the case where the dormancy determination unit determines that the time of cultivation is the dormant period.

9. The hydroponic cultivation apparatus according to any one of claims 1 to 8, wherein
the controller includes a timer which starts to measure a length of time from a reference time point after cultivation of the plant is started, wherein
the dormancy determination unit determines whether the time of cultivation is the dormant period, depending on whether the timer has measured a predetermined length of time since the reference time point.

10. The hydroponic cultivation apparatus according to any one of claims 1 to 8, further comprising:
a cultivation time input unit capable of inputting the time of cultivation, wherein
the dormancy determination unit determines that the time of cultivation is the dormant period, depending on whether the information from which it is possible to specify that the time of cultivation is the dormant period is inputted from the cultivation time input unit.

11. The hydroponic cultivation apparatus according to any one of claims 1 to 6, further comprising:
an image capturing unit which obtains image data on the aerial part, wherein
the controller includes
an image processor which processes the image data obtained by the image capturing unit, and thereby extracting specific information on the aerial part, and
a memory which stores a dormancy condition from which it is possible to specify that the time of cultivation is the dormant period, and
the dormancy determination unit determines whether the time of cultivation is the dormant period, depending on whether the specific information extracted by the image processor includes information which satisfies the dormancy condition stored in the memory.
